(19) Europäisches Patentamt
European Patent Office
Office européen des brevets

(11) Veröffentlichungsnummer: **0 481 407 A1**

# (12) EUROPÄISCHE PATENTANMELDUNG

(21) Anmeldenummer: **91117496.9**

(51) Int. Cl.$^5$: **A01N 57/20**

(22) Anmeldetag: **14.10.91**

(30) Priorität: **18.10.90 DE 4033034**

(43) Veröffentlichungstag der Anmeldung:
**22.04.92 Patentblatt 92/17**

(84) Benannte Vertragsstaaten:
**DE FR GB**

(71) Anmelder: **HOECHST AKTIENGESELLSCHAFT**
**Postfach 80 03 20**
**W-6230 Frankfurt am Main 80(DE)**

(72) Erfinder: **Müller-Wilmes, Urban**
**Rauenthaler Weg 33**
**W-6000 Frankfurt am Main(DE)**
Erfinder: **Schwerdtle, Friedhelm**
**Bergstrasse 17**
**W-6239 Eppstein/Taunus(DE)**

## (54) Verfahren zur Steigerung der Kohlenhydratbildung in Pflanzen.

(57) Durch Applikation von 2-Dimethylphosphinoyl-2-hydroxyessigsäure, Glyphosate, Glufosinate oder deren Salze oder Ester auf zucker- oder stärkespeichernde Pflanzen wie Zuckerrübe, Futterrübe, Kartoffeln, Getreide, Mais und Zuckerhirse beim Übergang von Massenbildungsphase zu Reifephase läßt sich die Einlagerung von Kohlenhydraten in die Ertragsorgane fördern und somit ein besserer Zucker- bzw. Stärkeertrag der Nutzpflanzen erreichen.

EP 0 481 407 A1

Die Erfindung betrifft das Gebiet der Pflanzenschutzmittel, speziell Herbizide, zur Ertragssteigerung bei Nutzpflanzen.

Herbizide werden primär zur Bekämpfung von Schadpflanzen eingesetzt.

Die Verbindungen der Formeln (I),(II) und (III)

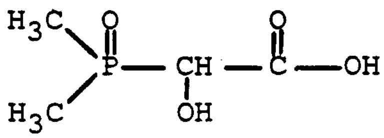

(I)

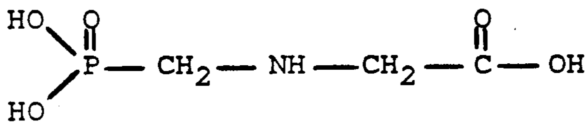

(II)

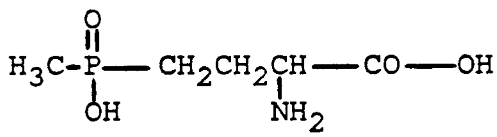

(III)

sowie ihre Salze, Ester und Analoga nach EP-A-0 106 114, US-A-3,799,758 bzw. US-A-4,168,963 sind als nicht-selektive Herbizide bekannt. Das Monoisopropylammoniumsalz der Verbindung der Formel (II) ist im Handel erhältlich; common name Glyphosate. Das Monoammoniumsalz der Verbindung der Formel (III) ist als Glufosinate-ammonium bekannt und im Handel erhältlich.

Den Verbindungen der Formeln (I) bis (III) ist gemeinsam, daß sie gezielt in den N-Stoffwechsel der Pflanzen eingreifen. So hemmen die Verbindungen (I) und (II) die Biosynthese einiger Aminosäuren in den Pflanzen (Schulz et al. FEBS Letters Vol. 238, 375-378 (1988) und J. Lyndon, S.O. Duke in Pestic. Science Vol. 25, 361-374 (1989) und G. Nilsson in Swed. J. Agric. Res. Vol. 7, 153 - 158 (1977)). Die Verbindung der Formel (III) hemmt vor allem den N-Metabolismus in Pflanzen (siehe H. Köcher, British Crop Protection Council Mono. No. 42, Seiten 173 ff (1989)).

Das Sesquinatrium-Salz der Verbindung der Formel (II) wird jedoch auch als Wachstumsregulator in Zuckerrohr eingesetzt (siehe "The Pesticide Manual" British Crop Protection Council, 8th Ed. 1987, 449 - 450 und US-A-3,853,530). Die Behandlung des Zuckerrohrs bewirkt dabei eine Hemmung des vegetativen Wachstums des Sprosses und infolgedessen eine Erhöhung des Zuckergehaltes (Konzentrationseffekt).

Es wurde nun gefunden, daß man überraschenderweise bei einigen zucker- und stärkespeichernden Pflanzen, die keine dem Zuckerrohr vergleichbare Speicherung der Kohlenhydrate im Sproß aufweisen, eine Verbesserung der Einlagerung von Kohlenhydraten in die Ertragsorgane erreichen kann, wenn man die Pflanzen unter bestimmten Bedingungen behandelt.

Gegenstand der Erfindung ist daher ein Verfahren zur Förderung der Einlagerung von Kohlenhydraten in die Ertragsorgane zucker- oder stärkespeichernder Pflanzen, dadurch gekennzeichnet, daß man die Pflanzen mit einer subletalen Dosis mindestens einer Verbindung der Formeln (I) bis (III) oder deren Salzen oder Ester, z.B. $C_1$-$C_{12}$-Alkylester, beim Übergang von Massenbildungsphase zur Reifephase der Pflanzen behandelt.

Salze sind vorzugsweise Alkalimetallsalze, wie Natrium und Kaliumsalze, oder Ammoniumsalze. Bevorzugter Wirkstoff der Formel (I) ist 2-Dimethylphosphinoyl-2-hydroxyessigsäure. Bevorzugter Wirkstoff der Formel (II) ist Glyphosate-monoisopropylammoniumsalz. Bevorzugter Wirkstoff der Verbindungen der Formel (III) ist Glufosinate-monoammoniumsalz.

Als zucker- bzw. stärkespeichernde Pflanzen sind z.B. die Nutzpflanzen Zuckerrübe, Futterrübe, Kartoffeln, Getreide, Mais und Zuckerhirse geeignet. Zuckerrüben sind als Pflanzen bevorzugt.

Bei manchen Pflanzen bezeichnet man den Übergang von Massenbildungsphase zur Reifephase auch als Übergang von Systemwachstum zu Produktwachstum. Zur Vereinfachung wird hier und im folgenden nur die erstgenannte Bezeichnung verwendet.

Das erfindungsgemäße Verfahren wird beispielsweise so durchgeführt, daß man eine übliche konzentrierte Formulierung des Wirkstoffs mit Wasser zu einer Spritzbrühe verdünnt und mit einer Wasseraufwandmenge von 50 bis 800 l/ha, vorzugswesiee 200 - 400 l/ha, auf die Blätter oder grünen Pflanzenteile der

Pflanzen beim Übergang von Massenbildungs- zur Reifephase der betreffenden Pflanze appliziert.

Der Übergang von Massenbildungs- zur Reifephase kann in den meisten Fällen am Verlauf des Blattflächenindexes erkannt werden, welcher dann maximal wird. Als Blattflächenindex bezeichnet man die halbe Summe der Blattflächen (inklusiver der oberen und unteren Blattflächen) aller Blätter der Pflanzen in Quadradrmeter bezogen auf einen Quadratmeter Bodenfläche. Die Applikation erfolgt vorzugsweise in einem Zeitraum von 20 Tagen vor Erreichen des maximalen Blattflächenindexes bis 30 Tage nach dem Maximum des Blattflächenindexes, insbesondere in einem Zeitraum von 50 Tagen um den Zeitpunkt des maximalen Blattflächenindexes, ganz besonders bei maximalem Blattflächenindex der jeweiligen Nutzpflanze.

Die Dosis für Verbindungen der Formel (I) und/oder (II) beträgt beispielsweise 5 bis 80 g/ha, vorzugsweise 10 bis 50 g/ha, insbesondere 15 bis 30 g/ha. Die gesamte Wirkstoffmenge kann dabei in einer Gabe oder in mehreren Gaben in dem genannten Zeitraum appliziert werden.

Die Förderung der Einlagerung von Kohlenhydraten, beispielsweise Zucker oder Stärke, in die Ertragsorgane der Nutzpflanzen läßt sich anhand der Erhöhung des Zucker- bzw. Stärkeertrages der Ertragsorgane (Früchte im eigentlichen Sinne wie Samenfrüchte, aber auch Knollen und Wurzeln) bestimmen.

Unter Zucker- bzw. Stärkeertrag versteht man die Menge in den Pflanzen gebildeten Zuckers bzw. gebildeter Stärke pro Anbaufläche. Zucker- bzw. Stärkeertrag hängen dabei vom anteiligen Zucker- bzw. Stärkegehalt der Ertragsorgane und der Menge an geernteten Ertragsorganen pro Anbaufläche ab. Eine Steigerung des Zucker- bzw. Stärkeertrages erfolgt nach dem erfindungsgemäßen Verfahren vorzugsweise bei nahezu konstantem Zucker- bzw. Stärkegehalt der Ertragsorgane. Eine Steigerung des Zucker- bzw. Stärkeertrags ist aber erfindungsgemäß beispielsweise auch durch Erhöhung des anteiligen Zucker- bzw. Stärkegehalts der Ernteorgane bei konstanter oder erhöhter Erntemenge an Ertragsorganen pro Anbaufläche möglich.

Auf welche der obengenannten Weisen die Steigerung des Zucker- bzw. Stärkeertrags erreicht wird, hängt von der jeweiligen Pflanzenart, Pflanzensorte bzw. Pflanzensortentypus und anderen Anbaubedingungen wie z.B. der Düngung ab. So läßt sich beispielsweise bei Zuckerrüben durch zusätzliche Stickstoffdüngung zu Beginn der Reifephase der Rübenertrag erheblich steigern ohne eine wesentliche, negative Veränderung des Zucker- oder Stärkegehaltes der Rübe hinnehmen zu müssen. In manchen Fällen ist es auch möglich, durch zusätzliche Stickstoffdüngung eine weitere Erhöhung des Zucker- bzw. Stärkegehaltes der Ertragsorgane zu erreichen, was häufig aus verarbeitungstechnischer Sicht ein Vorteil ist.

Üblicherweise treten insbesondere bei offener Lagerung von geernteten Früchten, z.B. in einer Feldmiete, Trockenmasseverluste durch Veratmung auf. Dadurch wird die Qualität der geernteten Früchte negativ beeinflußt (Abnahme der gespeicherten Kohlenhydrate). Das Ausmaß dieser Lagerungsverluste wird wesentlich durch die Dauer der Lagerung bestimmt. Die nach dem erfindungsgemäßen Verfahren erhaltenen Früchte weisen Lagerverluste auf, die mit denen nach herkömmlichen Anbauverfahren erhaltenen Früchten prozentual vergleichbar sind, aber auch niedriger sein können.

Der Zucker- bzw. Stärkegehalt ist nach standardisierten Analysenmethoden bestimmbar, beispielsweise durch Messung der optischen Aktivität einer Zuckerlösung (Polarimeterwert) aus Proben der geernteten Ertragsorgane im Vergleich zu Standardlösungen.

Bei Zuckerrüben ist die wirtschaftlich entscheidende Ertragsgröße der sogenannte "bereinigte Zuckerertrag". Er stellt die nach üblicher Aufarbeitung (Extraktion, Kristallisation) der Zuckerrüben isolierbare Zuckermenge pro Anbaufläche dar. Er läßt sich üblicherweise in guter Annäherung über den "bereinigten Zuckergehalt" polarimetrisch bestimmen, wobei Störfaktoren für die Zuckergewinnung aus den Ertragsorganen, wie Kalium- und Natriumgehalt und Gehalt an Aminosäuren ($\alpha$-Amino-N), als Korrekturfaktoren je nach Anbaugebiet und Sortentypus berücksichtigt werden.

Nach dem erfindungsgemäßen Verfahren werden deutliche Ertragssteigerungen erreicht, ohne die Qualität der zu erntenden Früchte entscheidend zu beeinträchtigen. Bei Zuckerrüben kann der bereinigte Zuckerertrag beispielsweise um 15 bis 20 % im Vergleich zu unbehandelten Pflanzen erhöht werden. Der Aufwand, der für die zusätzliche Behandlung nach dem erfindungsgemäßen Verfahren nötig ist, wird durch solche Ertragssteigerungen mehr als kompensiert.

Gegenstand der Erfindung ist daher auch das Erntegut von Pflanzen, die nach dem erfindungsgemäßen Verfahren behandelt worden sind.

Biologische Beispiele

Beispiel 1

Zuckerrübenpflanzen werden in Parzellenversuchen im Freiland bei maximalem Blattflächenindex von 4

bis 5 mit unterschiedlicher Dosis an 2-(Dimethylphosphinoyl)-2-hydroxyessigsäure (DMPHE) behandelt. Der Wirkstoff, der zunächst als konzentrierte übliche Formulierung mit 200 g/l aktivem Wirkstoff vorliegt, wird mit Wasser verdünnt (Wasseraufwandmenge etwa 300 l/ha) und auf die Zuckerrübenpflanzen versprüht. 2 bis 3 Monate später wird geerntet und der Zuckergehalt sowie der bereinigte Zuckergehalt in den geernteten Rüben bestimmt. In einer weiteren Versuchsserie werden die Zuckerrüben im Stadium des maximalen Blattflächenindexes von 4 bis 5 zusätzlich mit 100 kg/ha Stickstoff gedüngt, wobei der Zuckerrübenertrag nochmals gesteigert wird.

Bei der vorliegenden Versuchsserie werden zur Bestimmung des bereinigten Zuckergehaltes folgende Formeln verwendet:

$$BZE = (E \cdot BZG)/100$$

$$BZG = POL - 0{,}343 \cdot A^1 + 0{,}094 \cdot A^2 + 0{,}29 \text{ (empirische Formel)}$$

wobei

BZE = bereinigter Zuckerertrag in Dezitonne/ha,
E = Rübenertrag in dt/ha,
BZG = bereinigter Zuckergehalt in %,
POL = Polarisation (= gemessener Zuckergehalt in %),
$A^1$ = Gehalt an Kalium- und Natriumionen (in meq/100 g Rübe)
und
$A^2$ = Gehalt an $\alpha$-Amino-N (in meg/100 g Rüben) bedeuten.

Die Ergebnisse sind in Tabelle 1 zusammengestellt.

Tabelle 1

| Mittel | Dosis [g AS/ha] | Bereinigter Zuckerertrag [dt/ha] unmittelbar nach Ernte | nach 25 Tagen Lagerung | nach 48 Tagen Lagerung |
|---|---|---|---|---|
| Unbehandelt | - | 100 | 98 | 97 |
| DMPHE | 15 | 110 | 107 | 105 |
| " | 30 | 117 | 114 | 111 |
| " | 60*) | 117 | 114 | 110 |
| Unbehand. +Düngung | - | 101 | 97 | 94 |
| DMPHE +Düngung | 15 | 108 | 105 | 104 |
| " | 30 | 108 | 104 | 103 |
| " | 60*) | 117 | 111 | 113 |

Anmerkungen:

DMPHE = Dimethylphosphinoylhydroxyessigsäure

AS = Aktive Substanz (= bezogen auf reinen Wirkstoff)

*) = Appliziert in 4 Durchgängen mit jeweils 15 g AS/ha in Abständen von 7 Tagen

Düngung = Zusatzdüngung mit 100 kg/ha N bei maximalem Blattflächenindex.

Beispiel 2

Analog Beispiel 1 wurden Zuckerrüben mit Glyphosate-Isopropylammonium behandelt. Die Ergebnisse sind in Tabelle 2 zusammengestellt:

Tabelle 2

| Mittel | Dosis [g AS/ha] | Bereinigter Zuckerertrag [dt/ha] unmittelbar nach Ernte | nach 25 Tagen Lagerung | nach 48 Tagen Lagerung |
|---|---|---|---|---|
| Unbehandelt | - | 100 | 98 | 97 |
| W | 15 | 114 | 110 | 107 |
| Unbehand. + Düngung | - | 101 | 97 | 94 |
| W + Düngung | 15 | 111 | 105 | 99 |

Anmerkungen:

W = Wirkstoff Glyphosate-isopropylammonium in handelsüblicher Formulierung

AS = Aktive Substanz

Düngung = Zusatzdüngung mit 100 kg/ha N bei maximalem Blattflächenindex

## Patentansprüche

1. Verfahren zur Förderung der Einlagerung von Kohlenhydraten in die Ertragsorgane von zucker- oder stärkespeichernden Pflanzen, dadurch gekennzeichnet, daß man die Pflanzen mit einer subletalen Dosis mindestens einer Verbindung der Formeln (I) bis (III)

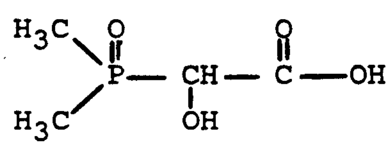

(I)

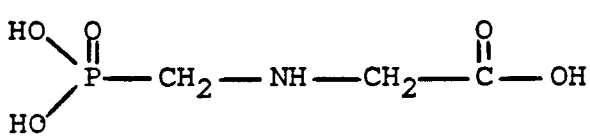

(II)

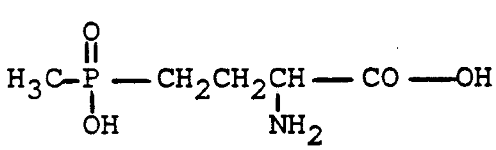

(III)

oder deren Salze oder Ester, beim Übergang von Massenbildungsphase zur Reifephase der Pflanzen behandelt.

2. Verfahren nach Anspruch 1, dadurch gekennzeichnet, daß als Verbindung der Formeln (I) bis (III) 2-Dimethylphosphinoyl-2-hydroxyessigsäure eingesetzt wird.

3. Verfahren nach Anspruch 1, dadurch gekennzeichnet, daß als Verbindung der Formeln (I) bis (III) Glyphosateisopropylammonium eingesetzt wird.

4. Verfahren nach Anspruch 1, 2 oder 3, dadurch gekennzeichnet, daß die Pflanze aus der Gruppe der Nutzpflanzen Zuckerrübe, Futterrübe, Kartoffel, Getreide, Mais und Zuckerhirse ausgewählt ist.

5. Verfahren nach einem oder mehreren der Ansprüche 1 bis 4, dadurch gekennzeichnet, daß 5 bis 80 g/ha Verbindung der Formeln (I) bis (III) appliziert werden.

6. Verfahren nach Anspruch 5, dadurch gekennzeichnet, daß 10 bis 60 g/ha Wirkstoff appliziert wird.

7. Verfahren nach einem oder mehreren der Ansprüche 1 bis 6, dadurch gekennzeichnet, daß der Wirkstoff im Stadium des maximalen Blattflächenindex appliziert wird.

8. Erntegut von Pflanzen, die nach einem Verfahren behandelt worden sind, das nach einem oder mehreren der Ansprüche 1 bis 7 definiert ist.

9. Erntegut nach Anspruch 8, dadurch gekennzeichnet, daß die Pflanzen Zuckerrübenpflanzen und das Erntegut Zuckerrüben sind.

10. Verwendung von in Anspruch 1, 2 oder 3 definierten Verbindungen zur Förderung der Einlagerung von Kohlenhydraten in die Ertragsorgane von zucker- oder stärkespeichernden Pflanzen.

Europäisches Patentamt

# EUROPÄISCHER RECHERCHENBERICHT

Nummer der Anmeldung

**EP 91 11 7496**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 106 114 (HOECHST)<br>* Seite 1, Zeile 8 - Seite 2, Zeile 31 *<br>* Seite 7, Zeile 11 - Seite 8, Zeile 10 *<br>* Seite 10, Zeile 20 - Zeile 23 *<br>* Seite 11 - Seite 12; Beispiele 1-4 *<br>* Seite 19; Beispiel 2 *<br>* Ansprüche 5,8 * *<br>— — — | 1-2,4-10 | A 01 N 57/20 |
| X | EP-A-0 196 026 (HOECHST)<br>* Seite 1, Zeile 12 - Seite 4, Zeile 2 *<br>* Seite 7, Zeile 5 - Seite 8, Zeile 7 *<br>* Seite 11; Tabelle 1 *<br>* Anspruch 4 * *<br>— — — | 1-2,4-10 | |
| X | US-A-3 988 142 (JOHN E. FRANZ)<br>* Spalte 1, Zeile 12 - Spalte 2, Zeile 29 *<br>* Spalte 3, Zeile 4 - Zeile 20 *<br>* Spalte 7; Beispiel 2 *<br>* Spalte 9; Beispiel 5 *<br>* Spalte 11, Zeile 40 - Zeile 63 *<br>* Ansprüche 1-4,7 * * | 1,3-10 | |
| D,X | (& US-A-3 853 530 (JOHN E. FRANZ) )<br>* Spalte 3, Zeile 27 - Zeile 36 *<br>* Spalte 6; Beispiel 3 * *<br>— — — | 1,3-10 | RECHERCHIERTE SACHGEBIETE (Int. Cl.5)<br>A 01 N |
| X | EP-A-0 054 382 (STAUFFER CHEMICAL)<br>* Seite 2, Zeile 10 - Zeile 25 *<br>* Seite 3, Zeile 8 - Zeile 9 *<br>* Seite 6; Beispiel 3 * *<br>— — — | 1,3-10 | |
| X | DE-A-3 200 486 (HOECHST)<br>* Seite 1; Ansprüche 1,2 *<br>* Seite 2, Zeile 11 - Seite 3, Zeile 6 *<br>* Seite 3, Zeile 18 - Seite 4, Zeile 23 *<br>* Seite 8; Beispiel 3; Tabelle 3 * *<br>— — —<br>–/– | 1,4-10 | |

Der vorliegende Recherchenbericht wurde für alle Patentansprüche erstellt

| Recherchenort | Abschlußdatum der Recherche | Prüfer |
|---|---|---|
| Den Haag | 27 Januar 92 | LAMERS W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

Europäisches Patentamt

# EUROPÄISCHER RECHERCHENBERICHT

Nummer der Anmeldung

**EP 91 11 7496**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | R.WEGELER 'Chemie der Pflanzenschutz- und Schädlingsbekämpfungsmittel, Bd. 4, Pflanzenwachstumsregulatoren, Fungizide, Holzschutz' 1977 , SPRINGER-VERLAG , BERLIN<br>* Seite 44, Absatz 1, 2 * *<br>– – – – – | 1,3-10 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| Den Haag | 27 Januar 92 | LAMERS W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument